# DEMANDE DE BREVET EUROPEEN

(11) **EP 2 579 199 A1**
(43) Date de publication de la demande: **10.04.2013**
(21) Numéro de dépôt: 11306297.0
(22) Date de dépôt: 06.10.2011
(51) Int. Cl.: G06Q 20/32, G06Q 20/12, G06Q 20/34

(54) **Procédé de paiement d'un produit ou d'un service sur un site marchand par l'intermédiaire d'une connexion Internet et terminal correspondant**

(71) Demandeur: Gemalto SA, 92190 Meudon (FR)
(72) Inventeur: Coupe, Virginie, 92190 MEUDON (FR); Czapska, Katarzyna, 92190 MEUDON (FR); Jaafar, Riadh, 92190 MEUDON (FR); Lee, Hon-Kuan, 92190 MEUDON (FR); Muroke, Anna-Maija, 92190 MEUDON (FR); Picatto, Cristophe, 92190 MEUDON (FR); Xu, Liu, 92190 MEUDON (FR)

(57) **Abrégé**

L'invention concerne notamment un procédé de paiement d'un produit ou d'un service sur un site marchand (21) par l'intermédiaire d'une connexion Internet et d'un terminal (30) connecté audit site marchand (21) par ladite connexion Internet, ledit procédé consistant à entrer dans un champ de saisie d'identifiant un identifiant bancaire de l'acheteur sur une page dudit site marchand (21) ou sur une page d'un site bancaire (13) relié audit site marchand (21),
caractérisé en ce que ledit terminal (30) comporte une interface de type NFC comprenant des moyens de lecture dudit identifiant bancaire compris dans une carte de paiement (31) de type NFC dudit acheteur et en ce que ledit terminal (30) comporte une application comportant des moyens de transmission et d'écriture dudit identifiant dans ledit champ de saisie, après que ladite carte de paiement (31) ait été approchée dudit terminal (30) pour que la communication de type NFC puisse s'établir, afin de remplir automatiquement ledit champ de saisie sans intervention dudit acheteur.

## Description

Le domaine de l'invention est celui des télécommunications et concerne plus précisément un procédé de paiement par Internet d'un produit ou d'un service sur un site Internet à l'aide d'un terminal connecté à ce site marchand. Un site marchand est un site proposant à un acheteur potentiel des produits ou des services qu'il peut commander et payer à distance.

Le terminal peut être un ordinateur fixe, portable, ou par exemple un téléphone mobile connecté par Internet au site marchand.

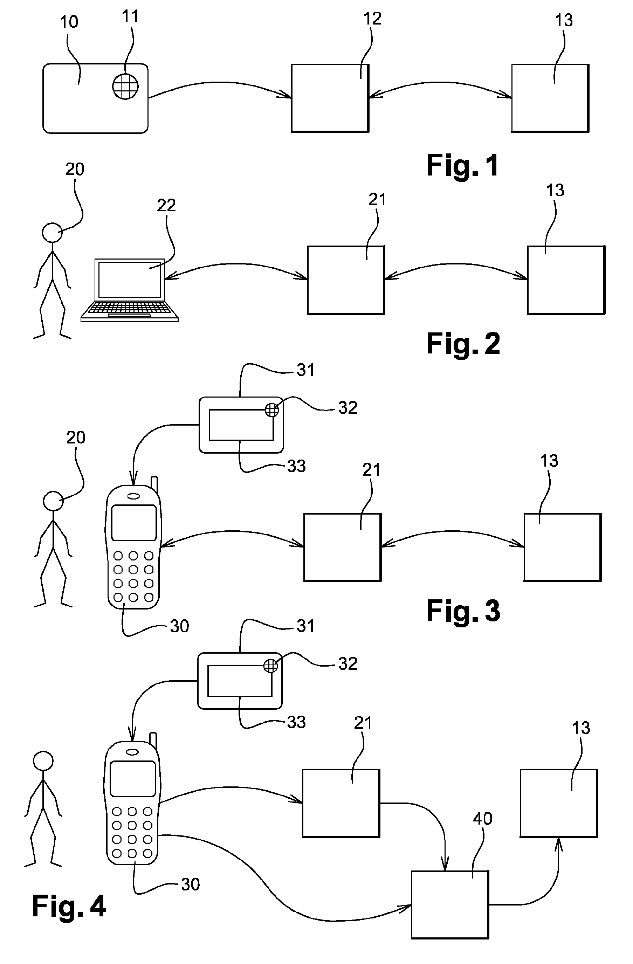

La figure 1 représente un système de paiement classique utilisé pour payer un produit ou un service auprès d'un commerçant. L'utilisateur procède au paiement à l'aide de sa carte bancaire 10 munie généralement d'une puce électronique 11. Pour procéder au paiement de la transaction, l'utilisateur insère sa carte bancaire 10 dans un terminal de paiement 12 qui est relié via Internet à un serveur de paiement bancaire 13. Une communication sécurisée est établie en trois le terminal de paiement 12 et le serveur de paiement bancaire 13. Le terminal de paiement 12 signe notamment la transaction, le type de transaction, quel terminal de paiement 12 a été utilisé avec une clé du terminal de paiement 12. Ces données sont vérifiées et par le serveur de paiement bancaire 13 et, si la transaction est autorisée, le vendeur en est informé et l'acheteur bénéficie de son produit ou de son service.

La figure 2 représente un système de paiement en ligne où un utilisateur 20 se connecte à un site marchand 21 par une liaison Internet à l'aide d'un terminal 22, par exemple un terminal portable, tel qu'un ordinateur. Après avoir effectué ses achats, l'utilisateur 20 accède à une page Internet de paiement comprenant des champs de saisie d'identifiants. Il s'agit typiquement d'un champ requérant le numéro de la carte bancaire de l'utilisateur 20, la date d'expiration de cette carte bancaire, ainsi que d'un champ où l'utilisateur doit entrer un cryptogramme figurant au dos de sa carte bancaire. L'utilisateur 20 entre ces informations dans les différents champs à l'aide du clavier du terminal 22. Une fois tous les champs renseignés, ceux-ci sont transmis à un serveur de paiement bancaire 13 qui vérifie que la transaction est autorisée. Le site marchand 21 en est alors informé ainsi que l'utilisateur 20 par l'intermédiaire du terminal 22.

L'inconvénient du système représenté à la figure 2 et que l'utilisateur 20 doit entrer manuellement ses identifiant (numéro de carte, date d'expiration, cryptogramme) dans le terminal 22 à fin de procéder au paiement. De plus, des erreurs de saisie sont possibles, ce qui oblige l'utilisateur 20 à recommencer la saisie de ses identifiant depuis le début.

On connaît par ailleurs des terminaux aptes à communiquer via NFC avec d"autres éléments. À titre d'exemple, de plus en plus de terminaux mobiles de type téléphones mobiles, sont pourvus de fonctionnalités NFC permettant par exemple de passer des portiques de métro, de régler des tickets de transport, ou de lire des tags à faible distance.

La présente invention a notamment pour objectif de simplifier l'achat de produits ou de services en ligne (c'est-à-dire via Internet), à l'aide d'un terminal connecté à un site marchand, ce terminal comportant des fonctionnalités de type NFC.

À cet effet, la présente invention propose un procédé de paiement d'un produit ou d'un service sur un site marchand par l'intermédiaire d'une connexion Internet et d'un terminal connecté au site marchand par la connexion Internet, le procédé consistant à entrer dans un champ de saisie d'identifiant un identifiant bancaire de l'acheteur sur une page du site marchand ou sur une page d'un site bancaire relié au site marchand, le terminal comporte une interface de type NFC comprenant des moyens de lecture de l'identifiant bancaire compris dans une carte de paiement de type NFC de l'acheteur et le terminal comporte une application comportant des moyens de transmission et d'écriture de cet identifiant dans le champ de saisie, après que la carte de paiement ait été approchée du terminal pour que la communication de type NFC puisse s'établir, afin de remplir automatiquement le champ de saisie sans intervention de l'acheteur.

Avantageusement, la carte de paiement de type NFC comporte également des moyens de lecture/écriture avec contact.

Selon un mode de mise en oeuvre préférentiel, le terminal est un téléphone mobile.

L'application transmet avantageusement l'identifiant à un serveur dédié par une liaison sécurisée auquel est connecté le site marchand, le serveur dédié concaténant les caractéristiques du paiement avant de les transmettre au site bancaire.

L'invention concerne également un terminal comportant une interface de type NFC comprenant des moyens de lecture d'un identifiant bancaire compris dans une carte de paiement de type NFC d'un acheteur, le terminal comportant une application comportant des moyens de transmission et d'écriture de cet identifiant dans un champ de saisie d'une page de paiement, après que la carte de paiement ait été approchée du terminal pour que la communication de type NFC puisse s'établir, afin de remplir automatiquement le champ de saisie sans intervention de l'acheteur.

D'autres caractéristiques et avantages de l'invention apparaîtront à la lecture de la description suivante des figures montrant un système de paiement en ligne, données à titre illustratif et non limitatif, et dont:
- la figure 3 représente un schéma simplifié de paiement en ligne mettant en oeuvre le procédé selon la présente invention;
- la figure 4 représente un schéma plus sécurisé que celui de la figure 1 mettant également en oeuvre le procédé selon la présente invention. Les figures 1 et 2 ont été décrites en référence à l'état de la technique.

La figure 3 représente un schéma simplifié de paiement en ligne mettant en oeuvre le procédé selon la présente invention.

Dans cette figure, un utilisateur 20 accède un site marchand 21 à l'aide d'un terminal 30 comprenant une fonctionnalité NFC. Le terminal 30 est connecté via Internet au site marchand 21. L'utilisateur 20 dispose d'une carte 31, par exemple de sa carte bancaire munie d'une puce 32, relié à une antenne 33 lui conférant une fonctionnalité NFC. Le terminal 30 est apte à lire des données confidentielles comprises dans la puce 32. Lorsque l'utilisateur a réalisé ses achats en ligne et que lui est présentée une page comprenant un ou plusieurs champs de saisie d'identifiant, la présente invention propose une application (applet si de type Java) installée au niveau du terminal 30 apte à lire les données confidentielles comprises dans la puce 32 via NFC. L'utilisateur active une fonctionnalité de paiement sans contact sur son terminal pour que les données confidentielles telles que numéros de compte, date d'expiration de la carte 31, cryptogramme, éventuellement le type de carte bancaire, soient alors transmises automatiquement de la carte 31 au terminal 30. L'application installée au niveau de ce terminal 30 transmet alors ses données confidentielles au site marchand 21. Les champs à renseigner pour procéder au paiement de la transaction sont alors automatiquement remplis, sans aucune intervention de l'utilisateur 20. L'échange de données entre le site marchand 21 et le serveur bancaire 13 s'opère comme expliqué en référence à la figure 2. L'avantage de cette solution est que l'utilisateur n'a plus qu'à approcher sa carte 31 de son terminal mobile 30 (après avoir choisi un mode de paiement « sans contact » sur le site marchand 21, qu'il choisirait une option de type « Paypal » par exemple) pour que les données confidentielles permettant d'identifier sa carte 31 soient transmises au site marchand 21. L'utilisateur n'a donc plus à entrer ses données confidentielles manuellement et il n'y pas de risque d'erreur de saisie de ces données.

Afin de sécuriser les données confidentielles transmises entre la carte 31 est le serveur bancaire 13, un schéma plus sécurisé représenté à la figure 4 fait intervenir un serveur dédié 40 qui a pour fonction de vérifier la présence de la carte 31 auprès du terminal 30, éventuellement de demander à l'utilisateur d'entrer un code PIN pour authentifier la transaction, et de créer un paquet de données comprenant toutes ces données, y compris les données confidentielles comprise dans la carte 31, et d'envoyer ce paquet de données au serveur bancaire 13. La liaison entre le terminal 30 et le serveur dédié 40 est une liaison sécurisée, par exemple de type https. L'application installée dans le terminal 30 combinée à la liaison sécurisée avec le serveur dédié 40 remplit la même fonction que le terminal de paiement 12 de la figure 1. Les données nécessaires pour la transaction sont également transmises du site marchand 21 au serveur dédié 40. Dans ce mode de mise en oeuvre, la solution technique est donc basée sur deux éléments qui en combinaison forment un point de vente physique (POS) permettant de réaliser une transaction de paiement:
- une application dans le terminal mobile 30 permettant d'accéder sans contact à des informations comprises dans la carte de paiement 31 ;
- un serveur 40 de paiement et d'authentification accessible via Internet qui authentifie la carte et transmet les données de transaction à un serveur bancaire 13 (serveur bancaire du marchand ou réseau de paiement global de type Visa par exemple).

L'invention permet donc de conserver secrète des informations bancaires comprises dans la carte 31 (le site marchand ne conserve pas d'informations), d'augmenter la sécurité en imposant l'utilisation physique de la carte 31 et éventuellement également l'entrée d'un code d'un code PIN. De plus, l'application comprise dans le terminal 30 peut être téléchargé à partir de la page de paiement du site marchand 21.

Le site marchand 21 bénéficie également d'un moindre risque de ne pas être payé, par exemple dans le cas de vol des informations confidentielles comprises dans la carte 31.

Enfin l'invention permet de diminuer les fraudes de paiement par Internet et confère à la banque un avantage par rapport à ses concurrents qui ne disposent pas de cette possibilité offerte à l'utilisateur de réaliser un paiement via NFC en approchant simplement sa carte 31 de son terminal 30.

L'invention s'applique notamment aux cartes utilisant la technologie EMV basées sur la technologie DDA (Dynamic Data Authentication). Chacune de ces cartes contient une clé privée et un crypto-processeur lui permettant de générer une signature unique lors de chaque transaction.

Cette signature unique est fondée sur des données aléatoires, différentes à chaque utilisation. Les éléments de l'authentification sont en effet fournis au terminal de paiement électronique par la carte elle-même. L'invention s'applique également aux cartes EMV de type SDA (Static Data Authentication) antérieures aux cares de type DDA. Le mode SDA permettait aux fraudeurs de dupliquer les données du client pendant la phase « statique » de l'authentification de la puce. Le mode DDA supprime totalement ce type de fraude en rendant la phase d'authentification «dynamique».

L'invention concerne également un terminal comportant une interface de type NFC comprenant des moyens de lecture d'un identifiant bancaire compris dans une carte de paiement de type NFC d'un acheteur. Le terminal comporte une application comportant des moyens de transmission et d'écriture de cet identifiant dans un champ de saisie d'une page de paiement, après que la carte de paiement ait été approchée du terminal pour que la communication de type NFC puisse s'établir, afin de remplir automatiquement le champ de saisie sans intervention de l'acheteur.

## Revendications

1. Procédé de paiement d'un produit ou d'un service sur un site marchand (21) par l'intermédiaire d'une connexion Internet et d'un terminal (30) connecté audit site marchand (21) par ladite connexion Internet, ledit procédé consistant à entrer dans un champ de saisie d'identifiant un identifiant bancaire de l'acheteur sur une page dudit site marchand (21) ou sur une page d'un site bancaire (13) relié audit site marchand (21),
**caractérisé en ce que** ledit terminal (30) comporte une interface de type NFC comprenant des moyens de lecture dudit identifiant bancaire compris dans une carte de paiement (31) de type NFC dudit acheteur et **en ce que** ledit terminal (30) comporte une application comportant des moyens de transmission et d'écriture dudit identifiant dans ledit champ de saisie, après que ladite carte de paiement (31) ait été approchée dudit terminal (30) pour que la communication de type NFC puisse s'établir, afin de remplir automatiquement ledit champ de saisie sans intervention dudit acheteur.

2. Procédé selon la revendication 1, **caractérisé en ce que** ladite carte de paiement (31) de type NFC comporte également des moyens de lecture/écriture avec contact.

3. Procédé selon l'une des revendications 1 et 2, **caractérisé en ce que** ledit terminal (30) est un téléphone mobile.

4. Procédé selon l'une des revendications 1 à 3, **caractérisé en ce que** ladite application transmet ledit identifiant à un serveur dédié (40) par une liaison sécurisée auquel est connecté ledit site marchand (21), ledit serveur dédié (40) concaténant les caractéristiques dudit paiement avant de les transmettre audit site bancaire (13).

5. Terminal (30) comportant une interface de type NFC comprenant des moyens de lecture d'un identifiant bancaire compris dans une carte de paiement (31) de type NFC d'un acheteur, ledit terminal (30) comportant une application comportant des moyens de transmission et d'écriture de cet identifiant dans un champ de saisie d'une page de paiement, après que ladite carte de paiement (31) ait été approchée dudit terminal (30) pour que la communication de type NFC puisse s'établir, afin de remplir automatiquement le champ de saisie sans intervention dudit acheteur.
